# EUROPÄISCHE PATENTANMELDUNG

(11) **EP 1 416 005 A1**
(43) Veröffentlichungstag der Anmeldung: **06.05.2004**
(21) Anmeldenummer: 03090285.2
(22) Anmeldetag: 04.09.2003
(51) Int. Cl.: C08G 12/30

(54) **Aminotriazin-Copolymere mit verbesserter Wasserlöslichkeit, deren Verwendung und Verfahren zu dessen Herstellung**

(30) Priorität: 31.10.2002 DE 10251653
(71) Anmelder: AMI Agrolinz Melamine International GmbH, 4020 Linz (AT)
(72) Erfinder: Burger, Martin, Dr., 4020 Linz (AT); Rätzsch, Manfred, Prof. Dr., 4062 Wilhering (AT)
(74) Vertreter: Gross, Felix

(57) **Zusammenfassung**

Aminotriazin-Copolymere mit verbesserter Wasserlöslichkeit, deren Verwendung und Verfahren zu dessen Herstellung

Die Erfindung betrifft Aminotriazin-Copolymer mit verbesserter Wasserlöslichkeit, herstellbar durch Reaktion von C₁-C₈-Aldehyden mit mindestens einem Triazinderivat mit Bis(hydroxyalkyl)iminogruppen der Struktur (I): 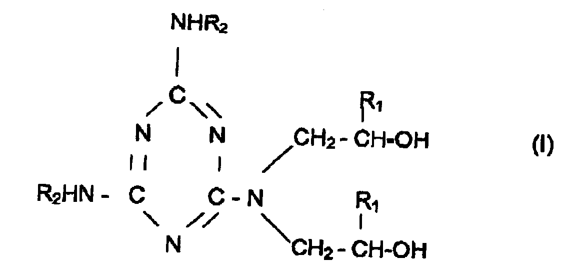 und / oder durch Reaktion von C₁-C₈-Aldehyden mit mindestens einem Triazinderivat mit Hydroxyalkylaminogruppen der Struktur (II): 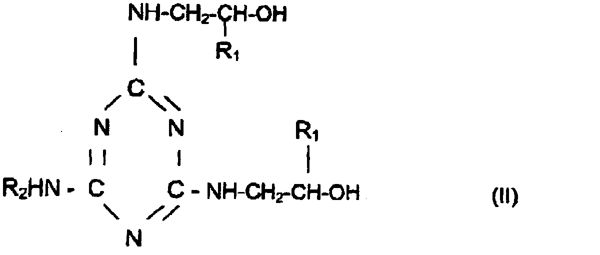 **R**_{**1**} **= H oder C**_{**1**}**-C**_{**4**} **- Alkyl** **R**_{**2**} **= H oder H**_{**9**}**C-O-CH**_{**2**}**-**

Die Erfindung betrifft auch die Verwendung und die Herstellung der Copolymere.

## Beschreibung

Aminotriazin-Copolymere mit verbesserter Wasserlöslichkeit, deren Verwendung und Verfahren zu dessen Herstellung

Die Erfindung betrifft ein Aminotriazin-Copolymer nach Anspruch 1, eine Verwendung nach Anspruch 6 und ein Verfahren zu dessen Herstellung nach Anspruch 9.

Aminotriazin-Copolymere, wie z.B. Melamin-Formaldehyd-Harze [siehe z.B. Ullmanns Encyclopedia of Industrial Chemistry (1987), Vol. 2A, 130-131] sind bekannt. Wasserlöslich sind jedoch nur Melamin-Formaldehyd-Vorkondensate mit Molmassen bis ca. 500 g/mol. Durch Bildung von Methylenetherbrücken und Methylenbrücken bei der weiteren Kondensation erfolgt eine rasche Abnahme der Wasserlöslichkeit, so dass Melamin-Formaldehyd-Harze mit Molmassen über 800 g/mol nur noch in Lösungsmitteln wie Pyridin oder Dimethylacetamid löslich und oberhalb von 5000 g/mol unlöslich und unschmelzbar sind.

Niedermolekulare Melaminharz-Vorkondensate besitzen eine zu geringe Schmelzviskosität für thermoplastische Verarbeitungsverfahren und können zu Erzeugnissen lediglich als hochgefüllte Formmassen bei langen Zykluszeiten unter Härtung der Erzeugnisse verarbeitet werden (Woebcken, W., Kunststoff-Handbuch Bd. 10 "Duroplaste", Carl Hanser Verlag München 1988, S. 266-274).

Melaminharzerzeugnisse in Form von Fasern, Schäumen oder Beschichtungen können ausgehend von Lösungen der Melaminharzvorkondensate nur unter gleichzeitiger Aushärtung während der Formgebung hergestellt werden, dies führt jedoch zu Produkten herabgesetzter Flexibilität.

Bekannt sind weiterhin wasserlösliche Melamin-Propylenoxid-Blockcopolymere aus hydroxymethyliertem Melamin und Propylenoxid (EP 0 051 734 A 1) mit hohem Propylenoxidanteil, die als Polyurethanprepolymere eingesetzt werden.

Ziel der Erfindung ist die Schaffung von Aminotriazin-Copolymeren, die bei Molmassen über 500 g/mol eine verbesserte Wasserlöslichkeit besitzen und aus der Schmelze verarbeitet werden können. Auch ist es Aufgabe der Erfindung ein Verfahren für die Herstellung dieser Stoffe zu schaffen.

Die Aufgabe wird durch Aminotriazin-Copolymere verbesserter Wasserlöslichkeit gelöst, wobei die Aminotriazin-Copolymere erfindungsgemäß durch Reaktion von C₁-C₈- Aldehyden und mindestens einem Triazinderivat mit Bis(hydroxyalkyl)iminogruppen der Formel (I): 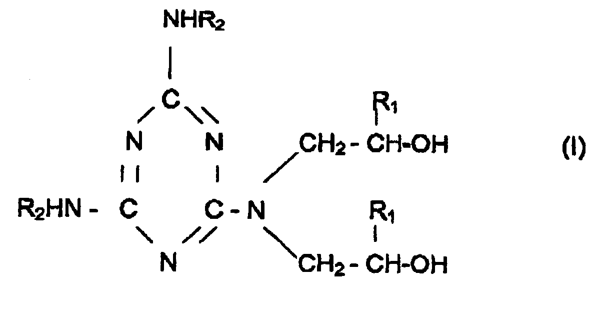 und / oder durch Reaktion von C₁-C₈- Aldehyden und mindestens einem Triazinderivat mit Hydroxyalkylaminogruppen gemäß der Formel (II):

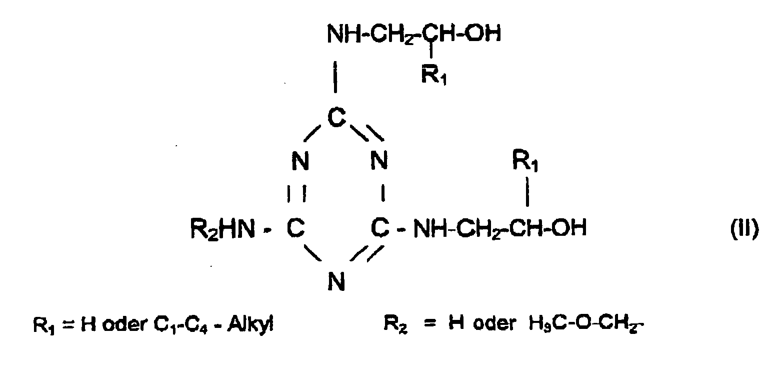

Der besondere Vorteil der erfindungsgemäßen Aminotriazin-Copolymere verbesserter Wasserlöslichkeit besteht darin, dass sich in Abhängigkeit vom eingesetzten Triazinderivat mit Hydroxyalkylgruppen und dem Molverhältnis Triazinderivat/Aldehyd lineare Aminotriazin-Copolymere bzw. Aminotriazin-Copolymere mit definiertem Verzweigungsgrad herstellen lassen, die in Form hochviskoser wässriger Lösungen oder Schmelzen nach üblichen Verfahren der Verarbeitung von Thermoplasten verarbeitet werden und wie Duroplaste vernetzt werden können. Erfindungsgemäß kann die Reaktion mit jeweils einem der beiden Reaktanden gemäß Formel (I) oder (II) durchgeführt werden. Erfindungsgemäß kann die Reaktion aber auch mit einer Reaktionsmischung der beiden Reaktanden gemäß den Formeln (I) und (II) durchgeführt werden.

Mit Vorteil weist eine Reaktionsmischung ein Verhältnis von 40 bis 99 Massen-% der Triazinderivate nach Formel (I) auf.

Auch ist es vorteilhaft, wenn in den Aminotriazin-Copolymeren das Molverhältnis zwischen C₁-C₈-Aldehyden zu Triazinderivate mit Hydroxyalkylgruppen 1 : 1 bis 2 : 1 beträgt. Auch ist es vorteilhaft, wenn die Aminotriazin-Copolymere Molmassen von 500 bis 200000 g/mol besitzen.

Beispiele für geeignete C₁-C₈-Aldehyde als Basis für die Aminotriazin-Copolymere sind Formaldehyd, Acetaldehyd oder Glyoxal.

Beispiele für geeignete Triazinderivate mit Bis(hydroxyalkyl)iminogruppen sind:
2-Bis(hydroxyethylamino)-4,6-diamino-triazin,
2-Bis(hydroxypropylamino)-4,6-diamino-triazin,
2-Bis(hydroxyalkylamino)-4-methoxymethylamino-6-aminotriazin, und
2-Bis(hydroxypropylamino)-4,6-dimethoxymethylamino-triazin.

Beispiele für geeignete Triazinderivate mit Hydroxyalkylaminogruppen sind:
2,4-Dihydroxyethylamino-6-amino-triazin,
2,4-Dihydroxypropylamino-6-amino-triazin und
2,4-Dihydroxyethylamino-6-methoxymethylamino-triazin.

Die Aminotriazin-Copolymere sind bevorzugt Copolymere auf Basis von Formaldehyd und 2.4-Di-(hydroxypropyl)amino-6-amino-1,3,5-triazin.

Die Aminotriazin-Copolymere verbesserter Wasserlöslichkeit werden erfindungsgemäß nach einem Verfahren gemäß Anspruch 10 hergestellt, bei dem Triazinderivate mit Bis(hydroxyalkyl)iminogruppen der oben angegebenen Formel (I) mit C₁-C₈-Aldehyden in flüssiger Phase umgesetzt werden.

In einer vorteilhaften Ausgestaltung des Verfahrens wird die Substanz gemäß Formel (I) mit einer Substanz gemäß Formel (II) gemischt, wobei die Substanz gemäß Formel (I) einen Massenanteil von 40 bis 99 Massen-% aufweist.

Vorteilhafterweise erfolgt die Umsetzung in wässriger Phase oder in einer Mischung mit 5 bis 99 Massen-% C₁-C₄ Alkoholen und 95 bis 1 Massen-% Wasser. Mit Vorteil werden ionische Katalysatoren zugesetzt. Vorteilhafte Betriebsbedingungen sind Temperaturen zwischen 45 bis 90°C und / oder Verweilzeiten von 15 bis 140 min.

In einer vorteilhaften Ausgestaltung des erfindungsgemäßen Verfahrens beträgt das Molverhältnis der C₁-C₈-Aldehyde zu den Triazinderivate mit Bis(hydroxyalkyl)-iminogruppen 1 : 1 bis 2 : 1.

Vorteilhafterweise beträgt der Feststoffgehalt der Triazinderivate mit Bis-(hydroxyalkyl)iminogruppen in der flüssigen, insbesondere in der wässrigen oder in der Wasser-Alkohol Mischung 5 bis 75 Massen-%.

Vorteilhafterweise werden die Aminotriazin-Copolymere durch Sprühtrocknung oder nach Aufkonzentrierung durch Aufschmelzen, Vakuumentgasung und Granulierung zum Feststoff aufgearbeitet.

Bevorzugt wird bei dem Verfahren zur Herstellung von Aminotriazin-Copolymeren als Triazinderivat mit Hydroxyalkylgruppen Melamindipropylenglykol eingesetzt.

Als C₁-C₈-Aldehyd wird bei dem Verfahren zur Herstellung von Aminotriazin-Copolymeren bevorzugt Formaldehyd eingesetzt.

Geeignete C₁-C₄-Alkohole, die in den Mischungen aus 5 bis 99 Massen-% C₁-C₄-Alkoholen und 95 bis 1 Massen-% Wasser eingesetzt werden können, sind Methanol, Ethanol und Isopropanol.

Geeignete ionische Katalysatoren, die bei dem erfindungsgemäßen Verfahren zur Herstellung von Aminotriazin-Copolymeren eingesetzt werden können, sind organische bzw. anorganische Säuren, Basen, Ionenaustauschharze und/oder saure Zeolithe.

Beispiele für geeignete Säuren als ionische Katalysatoren sind Salzsäure, Salpetersäure, Schwefelsäure, Ameisensäure oder Essigsäure.

Beispiele für geeignete Ionenaustauschharze als ionische Katalysatoren sind chlormethylierte und Trimethylaminaminierte Copolymere aus Styren und Divinylbenzen, sulfonierte Copolymere aus Styren und Divinylbenzen und m-Phenylendiamin-Formaldehyd-Copolymere.

Die erfindungsgemäßen Aminotriazin-Copolymere verbesserter Wasserlöslichkeit sind bevorzugt zur Verarbeitung aus Lösung, insbesondere als Adhesiv, Imprägnierharz. Lackharz oder Laminierharz, oder zur Herstellung von Schäumen, Mikrokapseln oder Fasern, oder zur Schmelzeverarbeitung, insbesondere als Schmelzkleber und zur Herstellung von Platten, Rohren, Profilen, Spritzgussteilen, Fasern, Beschichtungen oder Schaumstoffen, geeignet.

Die Verarbeitung der erfindungsgemäßen Aminotriazin-Copolymere in Form hochviskoser wässriger Lösungen zu Fasern kann nach dem Nassspinn- oder Trockenspinnverfahren erfolgen. Geeignete Verfahren der Schmelzeverarbeitung sind Extrusion und Spritzguss. Rezepturen für die Schmelzeverarbeitung können bis zu 40 Massen-% Verstärkungsfasern und bis zu 70 Massen-% Füllstoffe enthalten"

Die Erfindung wird durch nachfolgende Beispiele erläutert: Die Ermittlung des Gehalts des Aminotriazin-Copolymers an gebundenem Aldehyd erfolgt durch polarographische Analyse. Dazu wird zunächst der freie Aldehyd in der wässrigen Lösung des Aminotriazin-Copolymers bestimmt. Anschließend werden die Alkylolgruppen des Copolymere basisch durch LiOH gespalten, und die Summe aus gebundenem und freiem Aldehyd polarometrisch bestimmt. Aus der Differenz erhält man die Menge an gebundenem Aldehyd.

### Beispiel 1:

In einem Rundkolben mit Rückflusskühler werden 10 g (39,3 mmol) Melamin-di-propylenglykol (enthält 95 Massen-% des Triazinderivats der Formel (I) und 5 Massen-% des Triazinderivats der Formel (II), 3,9 g 30%ige wässrige Formaldehydlösung, entsprechend 39,0 mmol Formaldehyd und 11,0 g Wasser vorgelegt. Dies entspricht einem Molverhältnis Formaldehyd / Triazinderivat von 1 : 1. Die Lösung wird für 30 min auf 75 °C erwärmt und anschließend im Eisbad gekühlt. Das Lösungsmittel wird im Vakuum (10 mbar, 60°C) entfernt. Man erhält 10,5 g eines hellgelben, hochviskosen, wasserlöslichen Produktes mit einem Gehalt an gebundenem Formaldehyd von 7,2 Massen-% und einer Molmasse von 6500 g/mol.

Das erhaltene Aminotriazin-Copolymer kann thermisch gehärtet werden, was sich durch einen starken Anstieg der Viskosität ab 210 °C bei kontrolliertem Aufheizen (10 K/min) in der Dynamisch-Mechanischen-Analyse (DMA) zeigen lässt.

### Beispiel 2:

Versuchsdurchführung analog Beispiel 1, es wird jedoch die doppelte Menge an Formaldehyd eingesetzt (7,9 g 30%ige Formaldehydlösung) . Das eingesetzte Molverhältnis Formaldehyd/Triazinderivat beträgt 2:1. Man erhält 11,5 g eines farblosen, hochviskosen, wasserlöslichen Produktes mit einem Gehalt an gebundenem Formaldehyd von 11 % und einer Molmasse von 9500 g/mol.

Auch dieses Produkt ist thermisch härtbar, erkennbar durch einen starken Viskositätsanstieg in der DMA-Untersuchung ab 181°C.

### Beispiel 3:

In einem Rundkolben mit Rückflusskühler werden 10 g (39,3 mmol) Melamin-di-ethylenglykol (enthält 95 Massen-% des Triazinderivats der Formel (I) und 5 Massen-% des Triazinderivats der Formel (II), 3,9 g einer 30%igen wässrigen Aldehydlösung, (enthält 32,0 mmol Formaldehyd und 7 mmol Glyoxal), 10 g Wasser und 5 g Isobutanol vorgelegt. Dies entspricht einem Molverhältnis Aldehyd/Triazinderivat von 1 :
1. Die Lösung wird für 50 min auf 70°C erwärmt und anschließend im Eisbad gekühlt. Das Lösungsmittelgemisch wird im Vakuum (10 mbar, 80°C) entfernt. Man erhält 10,1 g eines hellgelben, hochviskosen, wasserlöslichen Produktes mit einem Gehalt an gebundenem Aldehyd von 7,1 Massen-% und einer Molmasse von 12500 g/mol.

Das erhaltene Aminotriazin-Copolymer kann thermisch gehärtet werden, was sich durch einen starken Anstieg der Viskosität ab 208°C bei kontrolliertem Aufheizen (10 K/min) in der Dynamisch-Mechanische-Analyse (DMA) zeigen lässt.

### Beispiel 4

In einem Rundkolben mit Rückflusskühler werden 10 h (39,3 mmol) Melamin-di-propylenglykol (enthält 95 Massen-% des Triazinderivats der Formel (I) und 5 Massen-% des Triazinderivats der Formel (II), 3,9 g 30%ige wässrige Formaldehydlösung, entsprechend 39,0 mmol Formaldehyd, und 11,0 g Wasser vorgelegt. Dies entspricht einem Molverhältnis Formaldehyd/Triazinderivat von 1 : 1. Die Lösung wird für 2 Stunden auf 75°C erwärmt und anschließend im Eisbad gekühlt. Das Lösungsmittel wird im Vakuum (10 mbar, 60°C) entfernt. Man erhält 10,8 g eines farblosen, hochviskosen, wasserlöslichen Produktes mit einem Gehalt an gebundenem Formaldehyd von 11,5 Massen-% und einer Molmasse von 36000 g/mol.

Das erhaltene Aminotriazin-Copolymer kann thermisch gehärtet werden, was sich durch einen starken Anstieg der Viskosität ab 200°C bei kontrolliertem Aufheizen (10 K/min) in der Dynamisch-Mechanische-Analyse (DMA) zeigen lässt.

## Patentansprüche

1. Aminotriazin-Copolymer mit verbesserter Wasserlöslichkeit, herstellbar durch
Reaktion von C₁-C₈-Aldehyden mit mindestens einem Triazinderivat mit Bis(hydroxyalkyl)iminogruppen der Struktur (I): 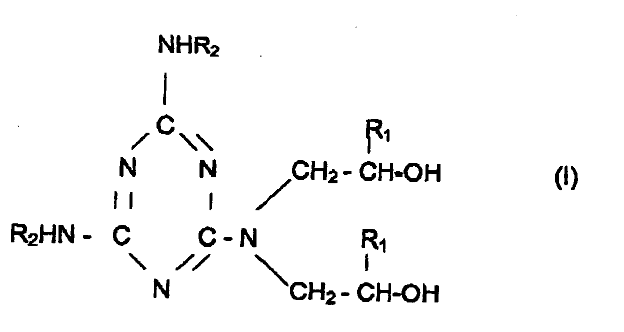 und / oder durch Reaktion von C₁-C₈-Aldehyden mit mindestens einem Triazinderivat mit Hydroxyalkylaminogruppen der Struktur (II):

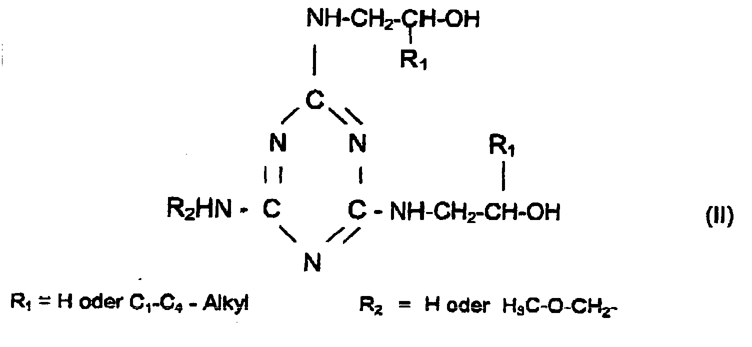

2. Aminotriazin-Copolymer nach Anspruch 1, **dadurch gekennzeichnet, dass** eine Reaktionsmischung einen Anteil von 40 bis 99 Massen-% an einem Triazinderivat mit Bis(hydroxyalkyl)iminogruppen der Struktur (I) aufweist.

3. Aminotriazin-Copolymer nach Anspruch 1 oder 2, **dadurch gekennzeichnet, dass** das Molverhältnis zwischen den C₁-C₈-Aldehyden zu Triazinderivaten mit Hydroxyalklygruppen 1:1 bis 2:1 beträgt.

4. Aminotriazin-Copolymer nach mindestens einem der vorhergehenden Ansprüche, **gekennzeichnet durch** Copolymere mit einer Molmasse von 500 bis 200000 g/mol.

5. Aminotriazin-Copolymer nach mindestens einem der vorhergehenden Ansprüche, **dadurch gekennzeichnet, dass** die Aminotriazin-Copolymere Copolymere auf Basis von Formaldehyd und Melamin-dipropylenglycol sind.

6. Verwendung mindestens eines der Aminotriazin-Copolymer nach einem der vorhergehenden Ansprüche als Adhesiv, Imprägnierharz, Lackharz, Laminierharz, in der Herstellung von Kunststoffschäumen, Mikrokapseln oder Fasern.

7. Verwendung mindestens eines der Aminotriazin-Copolymere nach den Ansprüchen 1 bis 5 in einer Schmelzeverarbeitung, insbesondere als Schmelzekleber.

8. Verwendung mindestens eines der Aminotriazin-Copolymere nach den Ansprüchen 1 bis 5 bei der Herstellung von Platten, Rohren, Profilen, Spritzgusteilen, Fasern, Beschichtungen oder Schaumstoffen.

9. Verfahren zur Herstellung eines Aminiotriazin-Copolymers verbesserter Wasserlöslichkeit, **dadurch gekennzeichnet, dass** mindestens ein Triazinderivat mit Bis(hydroxyalkyl)iminogruppen der Struktur (I): 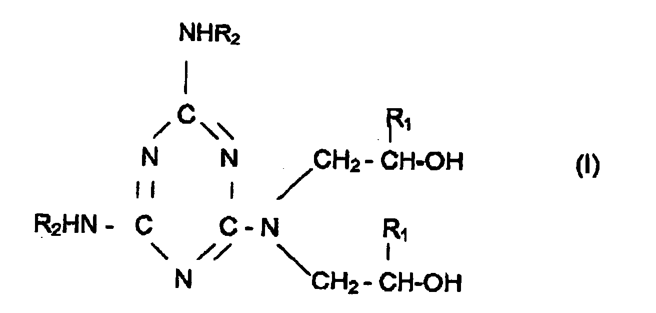 und / oder mindestens ein Triaziderivat mit Hydroxyalkylaminogruppen der Struktur (II) 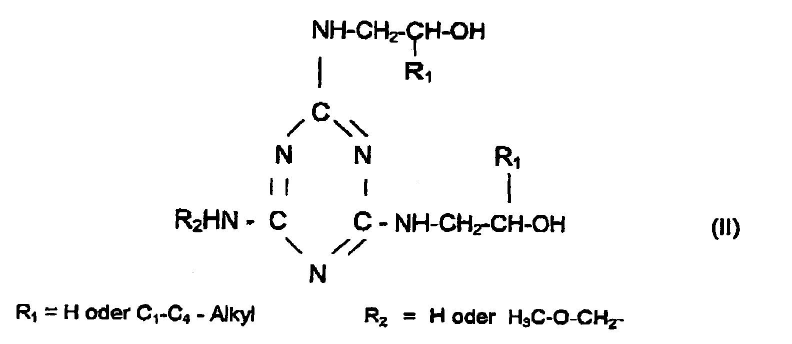 in flüssiger Phase mit C₁-C₈-Aldehyden umgesetzt wird.

10. Verfahren nach Anspruch 9, **dadurch gekennzeichnet, dass** eine Reaktionsmischung einen Anteil von 40 bis 99 Massen-% an einem Triazinderivat mit Bis(hydroxyalkyl)iminogruppen der Struktur (I) aufweist.

11. Verfahren nach mindestens einem der Ansprüche 9 oder 10, **dadurch gekennzeichnet, dass** die Umsetzung in wässriger Phase oder in einer Mischung mit 5 bis 99 Massen-% C₁-C₄-Alkoholen und 95 bis 1 Massen-% Wasser erfolgt.

12. Verfahren nach mindestens einem der Ansprüche 9 bis 11, **dadurch gekennzeichnet, dass** ionische Katalysatoren verwendet werden.

13. Verfahren nach mindestens einem der Ansprüche 9 bis 12, **dadurch gekennzeichnet, dass** die Betriebstemperatur zwischen 45 und 90 °C und / oder die Verweilzeit zwischen 15 und 140 Minuten beträgt.

14. Verfahren nach mindestens einem der Ansprüche 9 bis 13, **dadurch gekennzeichnet, dass** das Molverhältnis der C₁-C₈-Aldehyden zu den Triazinderivaten mit Bis(hydroxyalkyl)-iminogruppen zwischen 1 : 1 bis 2 : 1 liegt.

15. Verfahren nach mindestens einem der Ansprüche 9 bis 14, **dadurch gekennzeichnet, dass** der Feststoffgehalt der Triazinderivate mit Bis-(hydroxyalkyl)iminoglguppen in der flüssigen Phase 5 bis 75 Massen-% beträgt.

16. Verfahren nach mindestens einem der Ansprüche 9 bis 15, **dadurch gekennzeichnet, dass** die Aminotriazin-Copolymere durch Sprühtrocknung oder nach Aufkonzentrierung durch Aufschmelzen, Vacuumentgasung und Granulierung zum Feststoff aufgearbeitet werden.
